# EUROPEAN PATENT APPLICATION

(11) **EP 4 258 108 A1**
(43) Date of publication of application: **11.10.2023**
(21) Application number: 21919137.6
(22) Date of filing: 24.12.2021
(51) Int. Cl.: G06F 9/30

(54) **TENSOR PROCESSING METHOD, APPARATUS AND DEVICE, AND COMPUTER READABLE STORAGE MEDIUM**

(30) Priority: 13.01.2021 CN 202110043859; 10.02.2021 CN 202110185525
(71) Applicant: Huawei Technologies Co., Ltd., Shenzhen, Guangdong 518129 (CN)
(72) Inventor: YUAN, Jian, Shenzhen, Guangdong 518129 (CN); HE, Ke, Shenzhen, Guangdong 518129 (CN)
(74) Representative: Pfenning, Meinig & Partner mbB
(86) International application number: PCT/CN2021/141106
(87) International publication number: WO 2022/151950

(57) **Abstract**

This application discloses a tensor processing method, apparatus, and device, and a computer-readable storage medium, and belongs to the field of artificial intelligence technologies. The method includes: A first processor obtains a plurality of first tensors, and copies the plurality of first tensors into a second tensor, so that the second tensor includes the plurality of first tensors. The plurality of first tensors included in the second tensor occupy consecutive space in the second tensor. The first processor receives a first processing instruction sent by a second processor. The first processing instruction includes a first identifier used to indicate the second tensor and a first processing identifier used to indicate a first processing operation. The first processor processes the second tensor based on the first processing operation. In this application, a quantity of times of sending a processing instruction is reduced, usage of a processor and tensor processing concurrence are improved, to help improve processing efficiency.

## Description

### TECHNICAL FIELD

This application relates to the field of artificial intelligence technologies, and in particular, to a tensor processing method, apparatus, and device, and a computer-readable storage medium.

### BACKGROUND

In the field of artificial intelligence (artificial intelligence, AI) technologies, a tensor (tensor) is usually processed. Processing the tensor is, for example, element padding, copying, and an operation of the tensor. The tensor is an array with a unified data type (dtype), and is used to represent a high-dimensional matrix and vector. A tensor processing process depends on interaction between a primary processor (host) and a secondary processor (device). In an interaction process, the secondary processor completes processing of the tensor according to a processing instruction sent by the primary processor.

In a related technology, a primary processor sends processing instructions for each to-be-processed tensor one by one. Correspondingly, a secondary processor processes the tensors one by one according to the processing instruction. However, in such a processing manner, concurrence is poor, and usage of the secondary processor is limited by the primary processor. Consequently, usage of the secondary processor is low. It can be learned that the processing manner provided in the related technology is not flexible enough, and processing efficiency is low.

### SUMMARY

This application provides a tensor processing method, apparatus, and device, and a computer-readable storage medium, to resolve a problem provided in a related technology. Technical solutions are as follows:

According to a first aspect, a tensor processing method is provided. The method includes:

A first processor obtains a plurality of first tensors, and copies the plurality of first tensors into a second tensor, so that the second tensor includes the plurality of first tensors. The plurality of first tensors included in the second tensor occupy consecutive space in the second tensor. The first processor receives a first processing instruction sent by a second processor. The first processing instruction includes a first identifier used to indicate the second tensor and a first processing identifier used to indicate a first processing operation. The first processor processes the second tensor based on the first processing operation.

Because the first processor copies the plurality of first tensors into the second tensor, the second processor needs to send a processing instruction (that is, the first processing instruction) for the second tensor for only one time, to process the plurality of first tensors, to reduce a quantity of times that the second processor needs to send a processing instruction, and reduce a quantity of times of interaction between the first processor and the second processor. Therefore, a process in which the second processor sends a processing instruction is prevented from becoming a bottleneck of an entire processing process, so that the first processor can make full use of advantages in terms of bandwidth, computation, and the like, to improve usage of the first processor. In addition, the first processor can process the plurality of first tensors at one time. Such a processing manner offers higher concurrence to help improve processing efficiency.

In a possible implementation, that a first processor obtains a plurality of first tensors, and copies the plurality of first tensors into a second tensor includes: The first processor receives a plurality of copying instructions sent by the second processor. The plurality of copying instructions are in a one-to-one correspondence with the plurality of first tensors, any copying instruction in the plurality of copying instructions includes a second identifier, and the second identifier is used to indicate a first tensor corresponding to the any copying instruction. The first processor obtains the first tensor indicated by the second identifier, to obtain the plurality of first tensors, and copies the plurality of first tensors into the second tensor. In this implementation, the first processor copies the plurality of first tensors according to the copying instruction sent by the second processor. Such a copying manner is simple and direct, and is applicable to a large range.

In a possible implementation, the any copying instruction in the plurality of copying instructions further includes first address information, the first address information is used to indicate a first address, and the copying the plurality of first tensors into a second tensor includes: The first processor copies any first tensor into a first address in the second tensor, where the first address is an address indicated by first address information included in a copying instruction corresponding to the any first tensor. The second processor specifies the first address by using the copying instruction to carry the first address information, and the first processor copies the first tensor into the first address specified by the second processor, to accurately copy the first tensor.

In a possible implementation, the plurality of copying instructions are instructions sent by the second processor in a target sequence, and the copying the plurality of first tensors into a second tensor includes: The first processor sequentially copies the plurality of first tensors into the second tensor in the target sequence. The first processor copies the plurality of first tensors in a sequence in which the second processor sends the copying instructions, to flexibly copy the first tensor.

In a possible implementation, before the first processor obtains the plurality of first tensors, the method further includes: The first processor receives a creation instruction sent by the second processor. The creation instruction includes space information, the space information is used to indicate an amount of occupied space, and the amount of occupied space is determined based on a sum of space occupied by the plurality of first tensors. The first processor creates the second tensor based on the amount of occupied space indicated by the space information. Space occupied by the second tensor is the same as the amount of occupied space indicated by the space information. The first processor creates the second tensor according to the creation instruction sent by the second processor. Because the amount of occupied space is determined based on the sum of the space occupied by the plurality of first tensors, and the space occupied by the second tensor is the same as the amount of occupied space, it is ensured that the second tensor can accommodate the plurality of first tensors copied by the first processor.

In a possible implementation, the creation instruction further includes second address information, the second address information is used to indicate a second address, and that the first processor creates the second tensor based on the amount of occupied space indicated by the space information includes: The first processor creates, based on the amount of occupied space indicated by the space information, the second tensor at the second address indicated by the second address information. The first processor creates the second tensor at a second address specified by the second processor, to ensure address accuracy of the second tensor.

In a possible implementation, after the first processor obtains the plurality of first tensors, and copies the plurality of first tensors into the second tensor, the method further includes: The first processor receives a deletion instruction sent by the second processor. The deletion instruction includes a third identifier, and the third identifier is used to indicate a to-be-deleted first tensor. The first processor deletes the first tensor indicated by the third identifier. In other words, after the plurality of first tensors are copied into the second tensor, the first tensors included in the second tensor can functionally replace the plurality of copied first tensors. The plurality of copied first tensors are deleted, to release storage space in the first processor, and avoid occupying unnecessary storage resources.

In a possible implementation, the method further includes: The first processor receives a second processing instruction sent by the second processor. The second processing instruction includes a fourth identifier and a second processing identifier, the fourth identifier is used to indicate a third tensor, the third tensor includes some of the plurality of first tensors included in the second tensor, and the second processing identifier is used to indicate a second processing operation. The first processor processes, based on the second processing operation indicated by the second processing identifier, the third tensor indicated by the fourth identifier. In addition to performing overall processing on the second tensor, some first tensors in the second tensor can be further processed. Such a processing manner is flexible.

In a possible implementation, in response to a case in which the third tensor includes a plurality of first tensors, the plurality of first tensors included in the third tensor are adjacent first tensors in the second tensor.

According to a second aspect, a tensor processing method is provided. The method includes:

A second processor determines a first identifier used to indicate a second tensor. A plurality of first tensors included in the second tensor occupy consecutive space in the second tensor, and the plurality of first tensors included in the second tensor are obtained by a first processor by copying the plurality of first tensors.

The second processor determines a first processing identifier used to indicate a first processing operation corresponding to the second tensor.

The second processor sends, to the first processor, a first processing instruction carrying the first identifier and the first processing identifier. The first processing instruction is used by the first processor to process, based on the first processing operation indicated by the first processing identifier, the second tensor indicated by the first identifier.

In a possible implementation, before the second processor determines the first identifier used to indicate the second tensor, the method further includes: The second processor determines a plurality of second identifiers used to indicate the plurality of first tensors. The plurality of first tensors are in a one-to-one correspondence with the plurality of second identifiers. The second processor sends, to the first processor, a plurality of copying instructions carrying the plurality of second identifiers. The plurality of second identifiers are in a one-to-one correspondence with the plurality of copying instructions, and the plurality of copying instructions are used by the first processor to copy, into the second tensor, the plurality of first tensors indicated by the plurality of second identifiers.

In a possible implementation, before the second processor sends, to the first processor, the plurality of copying instructions carrying the plurality of second identifiers, the method further includes: The second processor determines first address information used to indicate a first address corresponding to any first tensor. The second processor uses a copying instruction corresponding to the any first tensor to carry the first address information. The copying instruction carrying the first address information is used by the first processor to copy the any first tensor into a first address indicated by the first address information.

In a possible implementation, that the second processor sends, to the first processor, a plurality of copying instructions carrying the plurality of second identifiers includes: The second processor sends the plurality of copying instructions to the first processor in a target sequence. The plurality of copying instructions are used by the first processor to sequentially copy the plurality of first tensors into the second tensor in the target sequence.

In a possible implementation, before the second processor determines the first identifier used to indicate the second tensor, the method further includes: The second processor determines an amount of occupied space based on a sum of space occupied by the plurality of first tensors. The second processor determines space information used to indicate the amount of occupied space, and sends, to the first processor, a creation instruction carrying the space information. The creation instruction is used by the first processor to create the second tensor, and space occupied by the second tensor is the same as the amount of occupied space indicated by the space information.

In a possible implementation, before the first processor sends the creation instruction carrying the space information, the method further includes: The second processor determines second address information used to indicate a second address corresponding to the second tensor, and uses the creation instruction to carry the second address information. The creation instruction carrying the second address information is used by the first processor to create the second tensor at the second address indicated by the second address information.

In a possible implementation, the method further includes: The second processor determines a third identifier used to indicate a to-be-deleted first tensor. The second processor sends, to the first processor, a deletion instruction carrying the third identifier. The deletion instruction is used by the first processor to delete the first tensor indicated by the third identifier.

In a possible implementation, the to-be-deleted first tensor is a first tensor indicated in a target instruction received by the second processor, or a first tensor that is not referenced for duration that exceeds a target threshold.

In a possible implementation, the method further includes: The second processor determines a fourth identifier used to indicate a third tensor. The third tensor includes some of the plurality of first tensors included in the second tensor. The second processor determines a second processing identifier used to indicate a second processing operation corresponding to the third tensor. The second processor sends, to the first processor, a second processing instruction carrying the fourth identifier and the second processing identifier. The second processing instruction is used by the first processor to process, based on the second processing operation indicated by the second processing identifier, the third tensor indicated by the fourth identifier.

In a possible implementation, in response to a case in which the third tensor includes a plurality of first tensors, the plurality of first tensors included in the third tensor are adjacent first tensors in the second tensor.

For a technical effect of any one of the second aspect and the possible implementations of the second aspect, refer to a technical effect of any one of the first aspect and the possible implementations of the first aspect. Details are not described herein again.

According to a third aspect, a tensor processing apparatus is provided. The apparatus includes:
an obtaining module, configured to obtain, by a first processor, a plurality of first tensors;
a copying module, configured to copy the plurality of first tensors into a second tensor, where the plurality of first tensors included in the second tensor occupy consecutive space in the second tensor;
a receiving module, configured to receive, by the first processor, a first processing instruction sent by a second processor, where the first processing instruction includes a first identifier and a first processing identifier, the first identifier is used to indicate the second tensor, and the first processing identifier is used to indicate a first processing operation; and
a processing module, configured to process, by the first processor based on the first processing operation indicated by the first processing identifier, the second tensor indicated by the first identifier.

In a possible implementation, the copying module is configured to: receive, by the first processor, a plurality of copying instructions sent by the second processor, where the plurality of copying instructions are in a one-to-one correspondence with the plurality of first tensors, any copying instruction in the plurality of copying instructions includes a second identifier, and the second identifier is used to indicate a first tensor corresponding to the any copying instruction; and obtain, by the first processor, the first tensor indicated by the second identifier, to obtain the plurality of first tensors, and copy the plurality of first tensors into the second tensor.

In a possible implementation, the any copying instruction in the plurality of copying instructions further includes first address information, the first address information is used to indicate a first address, and the copying module is configured to copy, by the first processor, any first tensor into a first address in the second tensor, where the first address is an address indicated by first address information included in a copying instruction corresponding to the any first tensor.

In a possible implementation, the plurality of copying instructions are instructions sent by the second processor in a target sequence, and the copying module is configured to sequentially copy, by the first processor, the plurality of first tensors into the second tensor in the target sequence.

In a possible implementation, the receiving module is further configured to receive, by the first processor, a creation instruction sent by the second processor. The creation instruction includes space information, the space information is used to indicate an amount of occupied space, and the amount of occupied space is determined based on a sum of space occupied by the plurality of first tensors.

The apparatus further includes a creation module, configured to create, by the first processor, the second tensor based on the amount of occupied space indicated by the space information. Space occupied by the second tensor is the same as the amount of occupied space indicated by the space information.

In a possible implementation, the creation instruction further includes second address information, the second address information is used to indicate a second address, and the creation module is configured to create, by the first processor based on the amount of occupied space indicated by the space information, the second tensor at the second address indicated by the second address information.

In a possible implementation, the receiving module is further configured to receive, by the first processor, a deletion instruction sent by the second processor. The deletion instruction includes a third identifier, and the third identifier is used to indicate a to-be-deleted first tensor.

The apparatus further includes a deletion module, configured to delete, by the first processor, the first tensor indicated by the third identifier.

In a possible implementation, the apparatus module is further configured to receive, by the first processor, a second processing instruction sent by the second processor. The second processing instruction includes a fourth identifier and a second processing identifier, the fourth identifier is used to indicate a third tensor, the third tensor includes some of the plurality of first tensors included in the second tensor, and the second processing identifier is used to indicate a second processing operation.

The processing module is further configured to process, by the first processor based on the second processing operation indicated by the second processing identifier, the third tensor indicated by the fourth identifier.

In a possible implementation, in response to a case in which the third tensor includes a plurality of first tensors, the plurality of first tensors included in the third tensor are adjacent first tensors in the second tensor.

According to a fourth aspect, a tensor processing apparatus is provided. The apparatus includes:
a determining module, configured to determine, by a second processor, a first identifier used to indicate a second tensor, where a plurality of first tensors included in the second tensor occupy consecutive space in the second tensor, and the plurality of first tensors included in the second tensor are obtained by a first processor by copying the plurality of first tensors, where
the determining module is further configured to determine, by the second processor, a first processing identifier used to indicate a first processing operation corresponding to the second tensor; and
a sending module, configured to send, by the second processor to the first processor, a first processing instruction carrying the first identifier and the first processing identifier, where the first processing instruction is used by the first processor to process, based on the first processing operation indicated by the first processing identifier, the second tensor indicated by the first identifier.

In a possible implementation, the determining module is further configured to determine, by the second processor, a plurality of second identifiers used to indicate the plurality of first tensors, where the plurality of first tensors are in a one-to-one correspondence with the plurality of second identifiers; and
the sending module is further configured to send, by the second processor to the first processor, a plurality of copying instructions carrying the plurality of second identifiers, where the plurality of second identifiers are in a one-to-one correspondence with the plurality of copying instructions, and the plurality of copying instructions are used by the first processor to copy, into the second tensor, the plurality of first tensors indicated by the plurality of second identifiers.

In a possible implementation, the determining module is further configured to: determine, by the second processor, first address information used to indicate a first address corresponding to any first tensor; and use, by the second processor, a copying instruction corresponding to the any first tensor to carry the first address information. The copying instruction carrying the first address information is used by the first processor to copy the any first tensor into a first address indicated by the first address information.

In a possible implementation, the sending module is configured to send, by the second processor, the plurality of copying instructions to the first processor in a target sequence. The plurality of copying instructions are used by the first processor to sequentially copy the plurality of first tensors into the second tensor in the target sequence.

In a possible implementation, the determining module is further configured to: determine, by the second processor, an amount of occupied space based on a sum of space occupied by the plurality of first tensors; and determine, by the second processor, space information used to indicate the amount of occupied space; and
the sending module is further configured to send, to the first processor, a creation instruction carrying the space information, where the creation instruction is used by the first processor to create the second tensor, and space occupied by the second tensor is the same as the amount of occupied space indicated by the space information.

In a possible implementation, the determining module is further configured to: determine, by the second processor, second address information used to indicate a second address corresponding to the second tensor, and use the creation instruction to carry the second address information. The creation instruction carrying the second address information is used by the first processor to create the second tensor at the second address indicated by the second address information.

In a possible implementation, the determining module is further configured to determine, by the second processor, a third identifier used to indicate a to-be-deleted first tensor; and
the sending module is further configured to send, by the second processor to the first processor, a deletion instruction carrying the third identifier, where the deletion instruction is used by the first processor to delete the first tensor indicated by the third identifier.

In a possible implementation, the to-be-deleted first tensor is a first tensor indicated in a target instruction received by the second processor, or a first tensor that is not referenced for duration that exceeds a target threshold.

In a possible implementation, the determining module is further configured to: determine, by the second processor, a fourth identifier used to indicate a third tensor, where the third tensor includes some of the plurality of first tensors included in the second tensor; and determine, by the second processor, a second processing identifier used to indicate a second processing operation corresponding to the third tensor; and
the sending module is further configured to send, by the second processor to the first processor, a second processing instruction carrying the fourth identifier and the second processing identifier, where the second processing instruction is used by the first processor to process, based on the second processing operation indicated by the second processing identifier, the third tensor indicated by the fourth identifier.

In a possible implementation, in response to a case in which the third tensor includes a plurality of first tensors, the plurality of first tensors included in the third tensor are adjacent first tensors in the second tensor.

According to a fifth aspect, another tensor processing apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method according to any one of the first aspect or the possible implementations of the first aspect.

According to a sixth aspect, another tensor processing apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method according to any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this application.

According to a seventh aspect, a tensor processing device is provided. The device includes a first processor and a second processor. The first processor is configured to perform the method according to any one of the first aspect or the possible implementations of the first aspect. The second processor is configured to perform the method according to any one of the second aspect or the possible implementations of the second aspect.

According to an eighth aspect, a computer program (product) is provided. The computer program (product) includes computer program code. When the computer program code is run on a computer, the computer is enabled to perform the method in the foregoing aspects.

According to a ninth aspect, a computer-readable storage medium is provided. The computer-readable storage medium stores a program or instructions. When the program or the instructions run on a computer, the method in the foregoing aspects is performed.

According to a tenth aspect, a chip is provided, including a processor, configured to: invoke, from a memory, instructions stored in the memory, and run the instructions, so that a communication device in which the chip is installed performs the method in the foregoing aspects.

According to an eleventh aspect, another chip is provided, including an input interface, an output interface, a processor, and a memory. The input interface, the output interface, the processor, and the memory are connected through an internal connection path. The processor is configured to execute code in the memory, and when the code is executed, the processor is configured to perform the method in the foregoing aspects.

### BRIEF DESCRIPTION OF DRAWINGS

FIG. 1 is a schematic diagram of a related technology according to an embodiment of this application;
FIG. 2 is a schematic diagram of an implementation environment according to an embodiment of this application;
FIG. 3 is a schematic flowchart of a tensor processing method according to an embodiment of this application;
FIG. 4 is a schematic diagram of copying a first tensor according to an embodiment of this application;
FIG. 5 is a schematic diagram of a second tensor according to an embodiment of this application;
FIG. 6 is a schematic flowchart of tensor processing according to an embodiment of this application;
FIG. 7 is a schematic flowchart of tensor processing according to an embodiment of this application;
FIG. 8 is a schematic diagram of a structure of a tensor processing apparatus according to an embodiment of this application;
FIG. 9 is a schematic diagram of a structure of a tensor processing apparatus according to an embodiment of this application; and
FIG. 10 is a schematic diagram of a structure of a tensor processing device according to an embodiment of this application.

### DESCRIPTION OF EMBODIMENTS

Terms used in implementations of this application are only used to explain specific embodiments of this application, but are not intended to limit this application.

In the field of AI technologies, a tensor is usually processed. A tensor processing manner includes but is not limited to element padding, copying, and an operation. Element padding is padding the tensor with a value and using the value as an element of the tensor, and the padded value is, for example, zero (that is, zero padding). Operations include but are not limited to addition, subtraction, multiplication, and division. In a tensor processing process, a secondary processor needs to complete processing of the tensor according to a processing instruction sent by a primary processor.

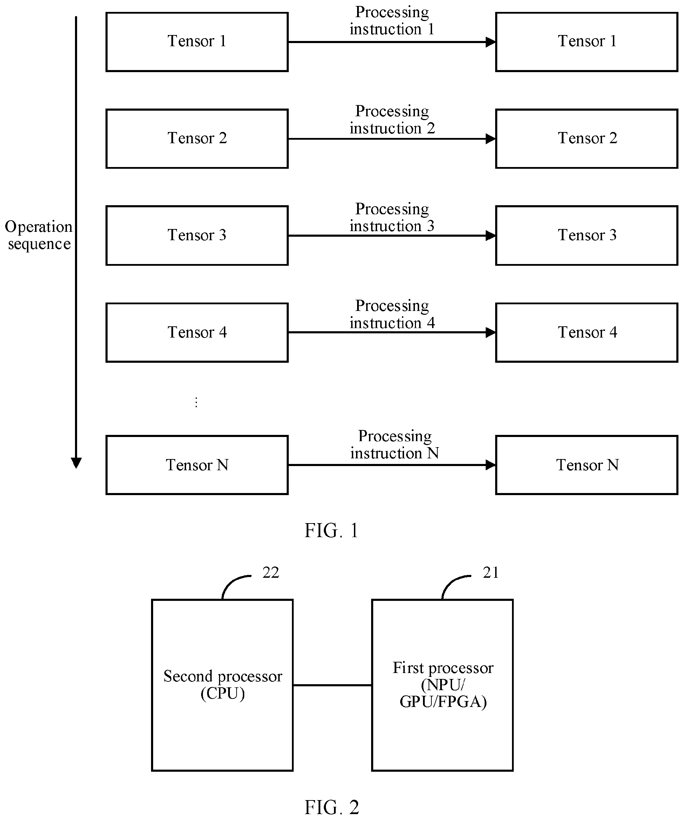

In a related technology, a primary processor sends processing instructions for each to-be-processed tensor one by one. Correspondingly, a secondary processor processes the tensors one by one according to the processing instruction. For example, refer to FIG. 1. For N to-be-processed tensors, the primary processor sends processing instructions to the secondary processor one by one. A total of N processing instructions are sent. Then, the secondary processor processes a tensor 1, a tensor 2, a tensor 3, ..., and a tensor N one by one according to the processing instructions.

It can be learned that, in a method provided in the related technology, the primary processor and the secondary processor need to perform interaction for a plurality of times, and a process in which the primary processor sends the processing instruction easily becomes a bottleneck of the entire processing process. Consequently, it is difficult for the secondary processor to make full use of advantages in terms of bandwidth, computation, and the like, and usage of the secondary processor is reduced. In addition, the secondary processor processes the tensors one by one, and concurrence is poor. Therefore, the method provided in the related technology is not flexible enough, and processing efficiency is low.

FIG. 2 shows an implementation environment according to an embodiment of this application. In FIG. 2, a first processor 21 and a second processor 22 are included. The second processor 22 is configured to: serve as a primary processor and send an instruction to the first processor 21. The first processor 21 is configured to serve as a secondary processor and implement tensor processing based on the received instruction. Certainly, in addition to the instruction, the first processor 21 and the second processor 22 may exchange other data based on an actual requirement. This is not limited in this embodiment.

For example, the first processor 21 includes but is not limited to an AI processor such as a graphics processing unit (graphics processing unit, GPU), a neural-network processing unit (neural-network processing unit, NPU), or a field-programmable gate array (field-programmable gate array, FPGA). The second processor 22 includes but is not limited to a central processing unit (central processing unit, CPU). An AI framework to which the first processor 21 and the second processor 22 are applicable includes but is not limited to Pytorch, TensorFlow, MindSpore, and PaddlePaddle (PaddlePaddle). The first processor 21 and the second processor 22 are integrated into a same device, or the first processor 21 and the second processor 22 are located in different devices. This is not limited in this embodiment.

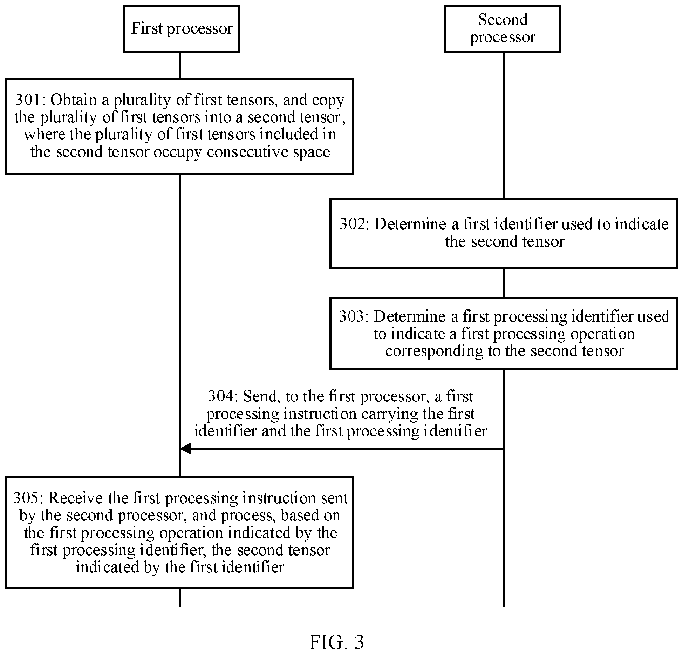

Based on the implementation environment shown in FIG. 2, an embodiment of this application provides a tensor processing method. As shown in FIG. 3, for example, the method is applied to interaction between a first processor and a second processor. The method includes the following steps.

301: The first processor obtains a plurality of first tensors, and copies the plurality of first tensors into a second tensor, where the plurality of first tensors included in the second tensor occupy consecutive space.

The plurality of first tensors obtained by the first processor are first tensors that are stored in the first processor and that are to be copied. The second tensor is a tensor that is created by the first processor and that can accommodate the plurality of first tensors obtained by the first processor. In other words, space occupied by the second tensor is not less than a sum of space occupied by the plurality of first tensors obtained by the first processor. Based on an actual processing requirement, the first processor selects, as the plurality of obtained first tensors, all or some of all tensors stored in the first processor. Then, the first processor copies the plurality of obtained first tensors into the second tensor, so that the second tensor also includes the plurality of first tensors. It may be considered that the second tensor is obtained by combining the plurality of first tensors. Therefore, the second tensor may also be referred to as a combined (combine) tensor. It should be noted that the plurality of first tensors obtained by the first processor and the plurality of first tensors included in the second tensor have completely same content and occupy same space, but have different addresses. In addition, because the first processor usually needs to store a large amount of data, the space occupied by the plurality of first tensors obtained by the first processor is usually dispersed. However, after the plurality of first tensors are copied, the plurality of first tensors included in the second tensor occupy consecutive space. That the plurality of first tensors included in the second tensor occupy consecutive space means that, for any two adjacent first tensors, a last bit of an address of a former first tensor is the same as a first bit of an address of a latter first tensor.

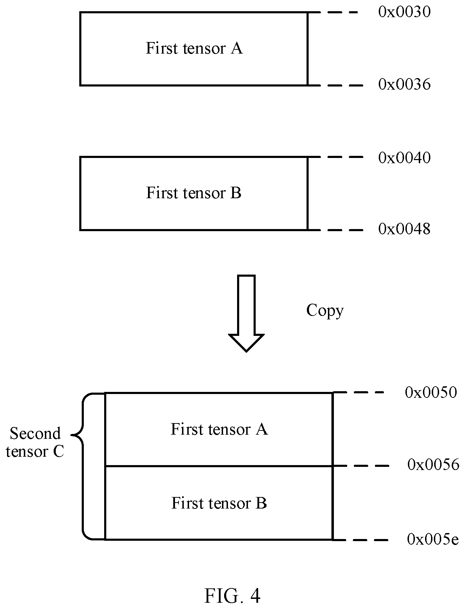

FIG. 4 shows a case in which two first tensors are copied. An address of a first tensor A obtained by the first processor is 0x0030-0x0036, and occupied space is 6 bytes. An address of a first tensor B obtained by the first processor is 0x0040-0x0048, and occupied space is 8 bytes. After the first tensor A and the first tensor B are copied into a second tensor C, an address of the first tensor A in the second tensor C is 0x0050-0x0056, and the first tensor A in the second tensor C and the first tensor A obtained by the first processor have same content and occupy same space, but have different addresses. An address of the first tensor B in the second tensor C is 0x0056-0x005e, and the first tensor B in the second tensor C and the first tensor B obtained by the first processor have same content and occupy same space, but have different addresses. In addition, in the second tensor C, a last bit of the address of the first tensor A is 0x0056, and a first bit of the address of the first tensor B is also 0x0056. Therefore, the first tensor A and the first tensor B occupy consecutive space.

302: The second processor determines a first identifier used to indicate the second tensor.

For example, the first identifier used to indicate the second tensor includes a first bit of an address of the second tensor and the space occupied by the second tensor. For example, a first bit of an address of the second tensor C shown in FIG. 4 is 0x0050, and occupied space is 14 bytes. In this case, the first identifier used to indicate the second tensor includes 0x0050 and 14 bytes. Alternatively, the first identifier used to indicate the second tensor includes a last bit of an address of the second tensor and the space occupied by the second tensor. For example, a last bit of an address of the second tensor C shown in FIG. 4 is 0x005e, and occupied space is 14 bytes. In this case, the first identifier used to indicate the second tensor includes 0x005e and 14 bytes. Alternatively, the first identifier used to indicate the second tensor includes a first bit of an address of the second tensor and a last bit of the address. The second tensor C shown in FIG. 4 is still used as an example. The first identifier used to indicate the second tensor includes 0x0050 and 0x005e.

It should be noted that the first identifier used to indicate the second tensor is not limited in this embodiment. Regardless of a specific first identifier used by the second processor to indicate the second tensor, the first processor can determine a unique second tensor based on the first identifier determined by the second processor.

303: The second processor determines a first processing identifier used to indicate a first processing operation corresponding to the second tensor.

The first processing operation corresponding to the second tensor is determined based on an actual processing requirement. This is not limited in this embodiment. For example, the first processing operation includes but is not limited to operations (operations, OP) such as element padding and copying, and a kernel function (kernel)-based operation. The first processing identifier is used to indicate the first processing operation, so that the first processor can determine a unique first processing operation based on the first processing identifier. For example, a first processing identifier used to indicate zero padding is zero, a first processing identifier used to indicate addition is add, a first processing identifier used to indicate subtraction is sub, a first processing identifier used to indicate multiplication is mul, and a first processing identifier used to indicate division is div.

It can be understood that, when the first processing operation includes the kernel function-based operation, in addition to determining the first processing identifier, related data required for an operation further needs to be determined. For example, the first processing operation includes division. In addition to determining that the first processing identifier is div, a divisor further needs to be determined, so that the first processor subsequently uses the second tensor as a dividend and completes a division operation with reference to the divisor.

304: The second processor sends, to the first processor, a first processing instruction carrying the first identifier and the first processing identifier.

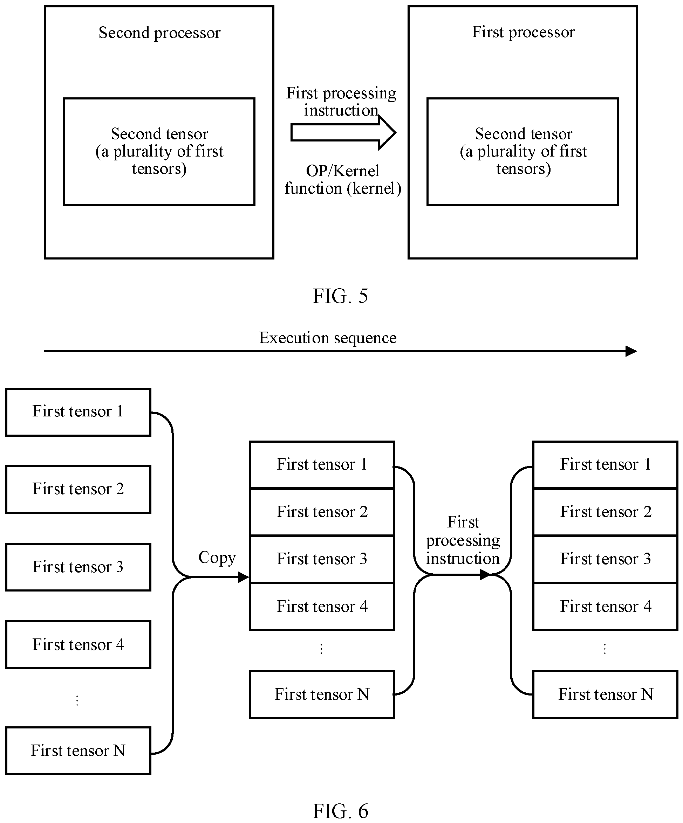

After determining the first identifier and the first processing identifier, the second processor generates the first processing instruction carrying the first identifier and the first processing identifier. For example, it can be learned, with reference to the descriptions in 303, that when the first processing operation includes the kernel function-based operation, the first processing instruction further carries the related data required for an operation. After generating the first processing instruction, the second processor sends the first processing instruction to the first processor. As shown in FIG. 5, the first processing instruction is for the second tensor that is obtained through copying and that includes the plurality of first tensors, and the second processor needs to send the first processing instruction for only one time, to implement processing of the second tensor in the first processor. Because the second tensor includes the plurality of first tensors, processing the second tensor is equivalent to processing the plurality of first tensors included in the second tensor.

For example, when the first processor and the second processor are located in different devices, the second processor encrypts and sends the first processing instruction, to ensure security of an interaction process. Alternatively, when the first processor and the second processor are located in a same device, the second processor directly sends the first processing instruction that is not encrypted.

305: The first processor receives the first processing instruction sent by the second processor, and processes, based on the first processing operation indicated by the first processing identifier, the second tensor indicated by the first identifier.

After the second processor sends the first processing instruction, the first processor correspondingly receives the first processing instruction. By parsing the first processing instruction, the first processor can obtain the first identifier and the first processing identifier. Then, the first processor determines the second tensor based on the first identifier, and determines the first processing operation based on the first processing identifier, to process the second tensor based on the first processing operation. FIG. 6 shows steps that need to be performed by the first processor in a processing process. The steps include: copying the plurality of first tensors (N first tensors, where N is a positive integer greater than 1), to obtain the second tensor, and processing the second tensor according to the first processing instruction after receiving the first processing instruction.

In a related technology, a processing instruction needs to be sent for each first tensor, to process a plurality of first tensors. Therefore, a plurality of processing instructions need to be sent. However, in this embodiment of this application, because the first processor copies the plurality of first tensors into the second tensor, the second processor needs to send a processing instruction (that is, the first processing instruction) for the second tensor for only one time, to process the plurality of first tensors. Compared with a method provided in the related technology, in the method provided in this embodiment of this application, the second processor needs to send a processing instruction for a smaller quantity of times, and the first processor interacts with the second processor for a smaller quantity of times. Therefore, a process in which the second processor sends a processing instruction is prevented from becoming a bottleneck of the entire processing process, so that the first processor can make full use of advantages in terms of bandwidth, computation, and the like, to improve usage of the first processor. In addition, the first processor can process the plurality of first tensors at one time. Compared with a manner in which the first tensors are processed one by one in the related technology, the processing manner used in this embodiment of this application offers higher concurrence to improve processing efficiency.

Further, in addition to processing the second tensor as a whole, in this embodiment, a part of the second tensor can be further processed, so that the tensor processing method provided in this embodiment of this application is more flexible. Refer to the following steps.

306: The second processor determines a fourth identifier used to indicate a third tensor, where the third tensor includes some of the plurality of first tensors included in the second tensor.

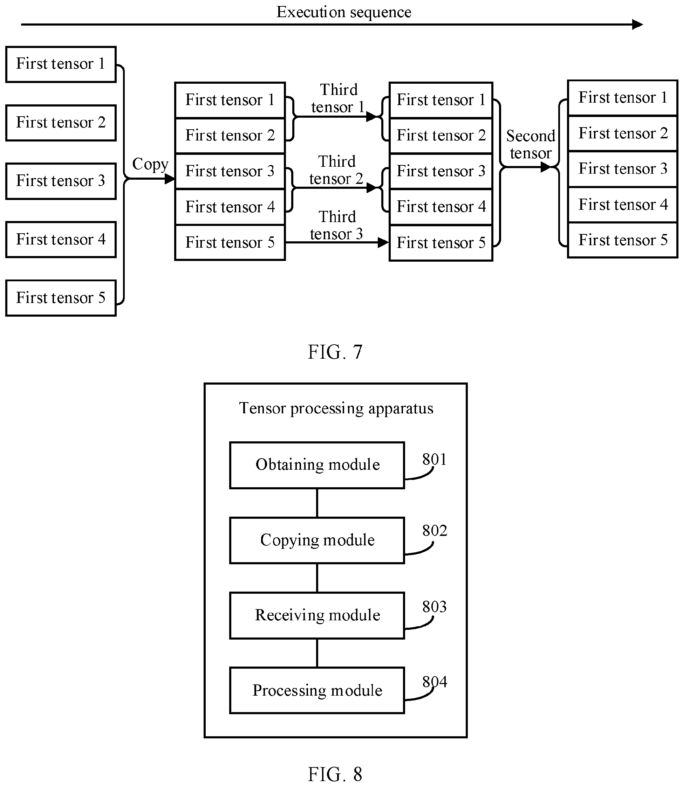

For the fourth identifier used to indicate the third tensor, refer to the descriptions of the first identifier in 302. Details are not described herein again. The third tensor is some of the plurality of first tensors included in the second tensor, and the third tensor includes one or more first tensors. When the third tensor includes one first tensor, the third tensor is one first tensor in the second tensor. For example, a third tensor 3 shown in FIG. 7 includes only one first tensor 5. Alternatively, the third tensor may include a plurality of first tensors. For example, a third tensor 1 shown in FIG. 7 includes a first tensor 1 and a first tensor 2, and a third tensor 2 includes a first tensor 3 and a first tensor 4.

Certainly, each third tensor shown in FIG. 7 is merely used as an example, and is not used to limit a quantity of first tensors included in the third tensor. Based on an actual processing requirement, the third tensor may alternatively include three, four, or more first tensors. In addition, different third tensors may include a same first tensor. Because each processing process is for one third tensor, no conflict occurs even if different third tensors include a same first tensor. A case shown in FIG. 7 is used as an example. In one processing process, the third tensor includes the first tensor 1 and the first tensor 2. In another processing process, the third tensor includes the first tensor 2 and the first tensor 3, and the two third tensors include a same first tensor 2.

In an example embodiment, in response to a case in which the third tensor includes a plurality of first tensors, the plurality of first tensors included in the third tensor are adjacent first tensors in the second tensor. For example, refer to FIG. 7. Because the first tensor 1 and the first tensor 2 are adjacent, the first tensor 1 and the first tensor 2 can form a third tensor. However, first tensors that are not adjacent, for example, the first tensor 1 and the first tensor 3, cannot form a third tensor. In other words, in the case shown in FIG. 7, no third tensor includes only the first tensor 1 and the first tensor 3. If a third tensor needs to include both the first tensor 1 and the first tensor 3, the third tensor further needs to include the first tensor 2, so that a third tensor is formed when the first tensor 1, the first tensor 2, and the first tensor 3 are adjacent.

307: The second processor determines a second processing identifier used to indicate a second processing operation corresponding to the third tensor, and the second processor sends, to the first processor, a second processing instruction carrying the fourth identifier and the second processing identifier.

For the second processing identifier used to indicate the second processing operation, refer to the descriptions of the first processing identifier in 303. For a process in which the second processor sends the second processing instruction, refer to the process of sending the first processing instruction in 304. Details are not described herein again.

308: The first processor receives the second processing instruction sent by the second processor, where the second processing instruction includes the fourth identifier and the second processing identifier, and the first processor processes, based on the second processing operation indicated by the second processing identifier, the third tensor indicated by the fourth identifier.

For a process in which the first processor processes the third tensor based on the second processing operation, refer to the descriptions in 305. Details are not described herein again.

It should be noted that a sequence of the foregoing steps is not used to limit an execution sequence of the two processing manners: overall processing and partial processing. Overall processing is a manner of processing the second tensor as a whole in 301 to 305, and partial processing is a manner of processing a part (that is, the third tensor) of the second tensor in 306 to 308. In other words, in some implementations, overall processing is performed, and then partial processing is performed. In some other implementations, partial processing is performed, and then overall processing is performed. For example, refer to FIG. 7. The third tensor 1, the third tensor 2, and the third tensor 3 are separately processed, and then the second tensor is processed.

The foregoing mainly describes a process in which a first processor and a second processor complete processing of a tensor by exchanging a processing instruction. 301 further relates to a process in which the first processor creates a second tensor and a process in which the first processor obtains and copies a plurality of first tensors. Therefore, the following specifically describes the processes related in 301.

For example, the first processor creates the second tensor based on a creation instruction sent by the second processor. A process of creating the second tensor based on the creation instruction includes the following steps.

A1: The second processor determines an amount of occupied space based on a sum of space occupied by the plurality of first tensors.

The second processor first determines the sum of the space occupied by the plurality of first tensors, to determine that the sum of the space occupied by the plurality of first tensors is the amount of occupied space. Alternatively, the second processor determines that a value greater than the sum of the space occupied by the plurality of first tensors is the amount of occupied space. This is not limited in this embodiment.

A2: The second processor determines space information used to indicate the amount of occupied space, and sends, to the first processor, a creation instruction carrying the space information.

For example, the second processor directly uses the amount of occupied space as the space information. Alternatively, the second processor stores a correspondence between an amount of occupied space and space information, and the second processor determines, based on the correspondence, the space information corresponding to the amount of occupied space. After the space information is obtained, the creation instruction is generated based on the space information, to send, to the first processor, the creation instruction carrying the space information. The second processor determines, based on an actual requirement, whether the creation instruction needs to be encrypted and sent.

A3: The first processor receives the creation instruction sent by the second processor, and the first processor creates the second tensor based on the amount of occupied space indicated by the space information, where space occupied by the second tensor is the same as the amount of occupied space indicated by the space information.

It can be learned from the descriptions in A1 and A2 that the creation instruction includes the space information used to indicate the amount of occupied space, and the space occupied by the second tensor created by the first processor is the same as the amount of occupied space indicated by the space information. Because the amount of occupied space is determined based on the sum of the space occupied by the plurality of first tensors, the second tensor is created in this manner, to ensure that the created second tensor can accommodate the plurality of first tensors.

The first processor creates the second tensor at a specific address. For example, the first processor independently selects a proper address to create the second tensor. After completing creation, the first processor further sends an address of the second tensor to the second processor, so that the second processor determines, based on the address of the second tensor in 302, a first identifier used to indicate the second tensor. Alternatively, in an example embodiment, the creation instruction further includes second address information, the second address information is used to indicate a second address, and that the first processor creates the second tensor based on the amount of occupied space indicated by the space information includes: The first processor creates, based on the amount of occupied space indicated by the space information, the second tensor at the second address indicated by the second address information. In this case, because the first processor creates the second tensor at the address specified by the second processor, the address of the second tensor does not need to be sent to the second processor, to avoid a waste of communication resources. For example, the second address information used to indicate the second address includes but is not limited to at least one of a first bit of the address and a last bit of the address. When the second address information includes the first bit of the address, the first processor creates the second tensor after the first bit of the address. When the second address information includes the last bit of the address, the first processor creates the second tensor before the last bit of the address. When the second address information includes the first bit of the address and the last bit of the address, the first processor creates the second tensor between the first bit of the address and the last bit of the address.

It can be understood that, because the creation instruction is sent by the second processor, when the creation instruction includes the second address information, the second processor uses the creation instruction to carry the second address information. Therefore, before the second processor sends, to the first processor, the creation instruction carrying the space information, the method further includes: The second processor determines second address information used to indicate a second address corresponding to the second tensor, and uses the creation instruction to carry the second address information.

In an example embodiment, the process in which the first processor obtains and copies the plurality of first tensors is completed based on a copying instruction sent by the second processor. A process of obtaining and copying the plurality of first tensors based on the copying instruction includes the following steps.

B 1: The second processor determines a plurality of second identifiers used to indicate the plurality of first tensors.

The plurality of first tensors are in a one-to-one correspondence with the plurality of second identifiers. In other words, one second identifier is used to uniquely indicate one first tensor. For the second identifier used to determine the first tensor, refer to the descriptions of the first identifier in 302. Details are not described herein again.

B2: The second processor sends, to the first processor, a plurality of copying instructions carrying the plurality of second identifiers.

The plurality of second identifiers are in a one-to-one correspondence with the plurality of copying instructions. In other words, one copying instruction includes and includes only one second identifier. One second identifier is used to uniquely indicate one first tensor. Therefore, a copying instruction is used by the first processor to copy one first tensor indicated by one second identifier included in the copying instruction. It can be learned that the plurality of copying instructions are in a one-to-one correspondence with the plurality of first tensors.

B3: The first processor receives the plurality of copying instructions sent by the second processor, obtains the first tensor indicated by the second identifier, to obtain the plurality of first tensors, and copies the plurality of first tensors into the second tensor.

The first processor obtains a plurality of corresponding first tensors based on the plurality of received copying instructions. Then, the first processor copies the plurality of obtained first tensors into the second tensor, so that the second tensor includes the plurality of first tensors. When the first processor copies the plurality of first tensors into the second tensor based on the copying instruction, a copying process includes the following two cases.

Case 1: The second processor determines first address information used to indicate a first address corresponding to any first tensor, and uses a copying instruction corresponding to the any first tensor to carry the first address information. Correspondingly, each copying instruction received by the first processor further includes the first address information. The first processor copies any first tensor into a first address in the second tensor. The first address is an address indicated by first address information included in a copying instruction corresponding to the any first tensor.

The first address information used to indicate the first address includes at least one of a first bit of the address and a last bit of the address. When the first address information includes the first bit of the address, the first processor copies the first tensor into a position after the first bit of the address. When the first address information includes the last bit of the address, the first processor copies the first tensor into a position before the last bit of the address. When the first address information includes the first bit of the address and the last bit of the address, the first processor copies the first tensor into a position between the first bit of the address and the last bit of the address.

Case 2: The second processor sends the plurality of copying instructions to the first processor in a target sequence, and the first processor sequentially copies the plurality of first tensors into the second tensor in the target sequence.

After receiving the 1^{st} copying instruction, the first processor uses, as the 1^{st} first tensor in the second tensor, a first tensor corresponding to the 1^{st} copying instruction. A first bit of an address of the 1^{st} first tensor is a first bit of an address of the second tensor. After receiving the 2^{nd} copying instruction, the first processor uses, as the 2^{nd} first tensor in the second tensor, a first tensor corresponding to the 2^{nd} copying instruction. A first bit of an address of the 2^{nd} first tensor is a last bit of the address of the 1^{st} first tensor, and so on, until all first tensors are copied.

It can be understood that after copying is completed, an arrangement sequence of the plurality of first tensors in the second tensor is the target sequence in which the second processor sends the plurality of copying instructions. For example, the second processor sequentially sends copying instructions of a first tensor C, a first tensor B, and a first tensor A. In this case, in the second tensor, the 1^{st} tensor is the first tensor C, the 2^{nd} first tensor is the first tensor B, and the 3^{rd} first tensor is the first tensor A. In addition, the first tensor C, the first tensor B, and the first tensor C occupy consecutive space.

In addition, after the first processor copies the plurality of first tensors into the second tensor, the second tensor includes the plurality of first tensors. Therefore, the first processor deletes the plurality of obtained first tensors, that is, the first tensors that are not located in the second tensor, to avoid occupying storage space in the first processor. For example, the first processor deletes the plurality of obtained first tensors based on a deletion instruction sent by the second processor. A deletion process includes the following steps.

C1: The second processor determines a third identifier used to indicate a to-be-deleted first tensor, and sends, to the first processor, a deletion instruction carrying the third identifier.

The to-be-deleted first tensor includes all first tensors obtained by the first processor, or includes some of all first tensors obtained by the first processor. In an example embodiment, the to-be-deleted first tensor is a first tensor indicated in a target instruction received by the second processor, or a first tensor that is not referenced for duration that exceeds a target threshold. In the former case, the target instruction is an instruction sent by a user, or an instruction sent by a management device. The management device is configured to manage a device in which the second processor and the first processor are located. In the latter case, the second processor monitors duration for which each first tensor is not referenced. If a duration for which a specific first tensor is not referenced exceeds the target threshold, the first tensor is used as a to-be-deleted first tensor. The target threshold is not limited in this embodiment.

C2: The first processor receives the deletion instruction sent by the second processor, where the deletion instruction includes the third identifier used to indicate the to-be-deleted first tensor, and the first processor deletes the first tensor indicated by the third identifier.

The first processor can obtain the third identifier by parsing the deletion instruction, to delete the to-be-deleted first tensor based on an indication of the third identifier, and prevent the first tensors from occupying the storage space in the first processor.

The following describes application scenarios of embodiments of this application. It can be understood that the following descriptions are merely an example, and are not intended to limit the application scenario of embodiments of this application.

Application scenario 1 is a mixed precision scaling scenario. The mixed precision scaling scenario relates to a division operation of a plurality of tensors. A first processor fuses the plurality of tensors, to obtain a fused tensor, and receives a processing instruction sent by a second processor. The processing instruction carries a processing identifier used to indicate the division operation and data (for example, a divisor) related to the division operation. The first processor processes the fused tensor based on the division operation indicated by the processing identifier.

Application scenario 2 is a gradient zeroing scenario. In this scenario, a plurality of tensors need to be set to zero. In other words, zero is assigned to all elements in each tensor. A first processor fuses a plurality of tensors, to obtain a fused tensor, and receives a processing instruction sent by a second processor. Then, the first processor processes the fused tensor based on a processing identifier that is in the processing instruction and that is used to indicate to assign zero to all elements.

Application scenario 3 is an optimizer fusion scenario. In a deep learning process, an optimal solution of a model usually needs to be determined by using an optimizer. The optimizer may also be understood as an optimization algorithm, for example, a gradient descent method. In an optimizer fusion process, operations such as addition, subtraction, multiplication, and division need to be performed on a plurality of tensors. Therefore, the first processor fuses the plurality of tensors, to obtain a fused tensor. After receiving a processing instruction sent by a second processor, the first processor performs an operation on the fused tensor by using an operation manner indicated by a processing identifier in the processing instruction and with reference to operation-related data carried in the processing instruction, to complete a tensor processing process.

The foregoing describes a tensor processing method in this application. Corresponding to the method, this application further provides a tensor processing apparatus. The apparatus is configured to perform, by using modules shown in FIG. 8, the tensor processing method performed by the first processor in FIG. 3. As shown in FIG. 8, the tensor processing apparatus provided in this application includes the following modules.

An obtaining module 801 is configured to obtain, by a first processor, a plurality of first tensors.

A copying module 802 is configured to copy the plurality of first tensors into a second tensor. The plurality of first tensors included in the second tensor occupy consecutive space in the second tensor. For steps performed by the obtaining module 801 and the copying module 802, refer to the descriptions in 301. Details are not described herein again.

A receiving module 803 is configured to receive, by the first processor, a first processing instruction sent by a second processor. The first processing instruction includes a first identifier and a first processing identifier, the first identifier is used to indicate the second tensor, and the first processing identifier is used to indicate a first processing operation.

A processing module 804 is configured to process, by the first processor based on the first processing operation indicated by the first processing identifier, the second tensor indicated by the first identifier. For steps performed by the receiving module 803 and the processing module 804, refer to the descriptions in 305. Details are not described herein again.

In a possible implementation, the copying module 802 is configured to: receive, by the first processor, a plurality of copying instructions sent by the second processor, where the plurality of copying instructions are in a one-to-one correspondence with the plurality of first tensors, any copying instruction in the plurality of copying instructions includes a second identifier, and the second identifier is used to indicate a first tensor corresponding to the any copying instruction; and obtain, by the first processor, the first tensor indicated by the second identifier, to obtain the plurality of first tensors, and copy the plurality of first tensors into the second tensor.

In a possible implementation, the any copying instruction in the plurality of copying instructions further includes first address information, the first address information is used to indicate a first address, and the copying module 802 is configured to copy, by the first processor, any first tensor into a first address in the second tensor, where the first address is an address indicated by first address information included in a copying instruction corresponding to the any first tensor.

In a possible implementation, the plurality of copying instructions are instructions sent by the second processor in a target sequence, and the copying module 802 is configured to sequentially copy, by the first processor, the plurality of first tensors into the second tensor in the target sequence.

In a possible implementation, the receiving module 803 is further configured to receive, by the first processor, a creation instruction sent by the second processor. The creation instruction includes space information, the space information is used to indicate an amount of occupied space, and the amount of occupied space is determined based on a sum of space occupied by the plurality of first tensors.

The apparatus further includes a creation module, configured to create, by the first processor, the second tensor based on the amount of occupied space indicated by the space information. Space occupied by the second tensor is the same as the amount of occupied space indicated by the space information.

In a possible implementation, the creation instruction further includes second address information, the second address information is used to indicate a second address, and the creation module is configured to create, by the first processor based on the amount of occupied space indicated by the space information, the second tensor at the second address indicated by the second address information.

In a possible implementation, the receiving module 803 is further configured to receive, by the first processor, a deletion instruction sent by the second processor. The deletion instruction includes a third identifier, and the third identifier is used to indicate a to-be-deleted first tensor.

The apparatus further includes a deletion module, configured to delete, by the first processor, the first tensor indicated by the third identifier.

In a possible implementation, the apparatus module is further configured to receive, by the first processor, a second processing instruction sent by the second processor. The second processing instruction includes a fourth identifier and a second processing identifier, the fourth identifier is used to indicate a third tensor, the third tensor includes some of the plurality of first tensors included in the second tensor, and the second processing identifier is used to indicate a second processing operation.

The processing module 804 is further configured to process, by the first processor based on the second processing operation indicated by the second processing identifier, the third tensor indicated by the fourth identifier.

In a possible implementation, in response to a case in which the third tensor includes a plurality of first tensors, the plurality of first tensors included in the third tensor are adjacent first tensors in the second tensor.

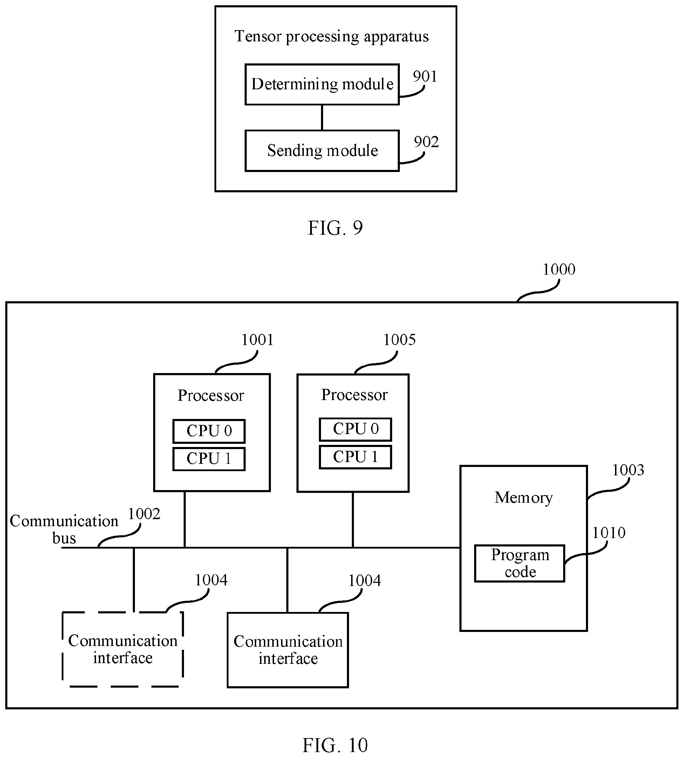

As shown in FIG. 9, this application further provides a tensor processing apparatus. The apparatus is configured to perform, by using modules shown in FIG. 9, the tensor processing method performed by the second processor in FIG. 3. The apparatus includes the following several modules.

A determining module 901 is configured to determine, by a second processor, a first identifier used to indicate a second tensor. A plurality of first tensors included in the second tensor occupy consecutive space in the second tensor, and the plurality of first tensors included in the second tensor are obtained by a first processor by copying the plurality of first tensors.

The determining module 901 is further configured to determine, by the second processor, a first processing identifier used to indicate a first processing operation corresponding to the second tensor. For steps performed by the determining module 901, refer to the descriptions in 302 and 303. Details are not described herein again.

A sending module 902 is configured to send, by the second processor to the first processor, a first processing instruction carrying the first identifier and the first processing identifier. The first processing instruction is used by the first processor to process, based on the first processing operation indicated by the first processing identifier, the second tensor indicated by the first identifier. For steps performed by the sending module 902, refer to the descriptions in 304. Details are not described herein again.

In a possible implementation, the determining module 901 is further configured to determine, by the second processor, a plurality of second identifiers used to indicate the plurality of first tensors, where the plurality of first tensors are in a one-to-one correspondence with the plurality of second identifiers; and
the sending module 902 is further configured to send, by the second processor to the first processor, a plurality of copying instructions carrying the plurality of second identifiers, where the plurality of second identifiers are in a one-to-one correspondence with the plurality of copying instructions, and the plurality of copying instructions are used by the first processor to copy, into the second tensor, the plurality of first tensors indicated by the plurality of second identifiers.

In a possible implementation, the determining module 901 is further configured to: determine, by the second processor, first address information used to indicate a first address corresponding to any first tensor; and use, by the second processor, a copying instruction corresponding to the any first tensor to carry the first address information. The copying instruction carrying the first address information is used by the first processor to copy the any first tensor into a first address indicated by the first address information.

In a possible implementation, the sending module 902 is configured to send, by the second processor, the plurality of copying instructions to the first processor in a target sequence. The plurality of copying instructions are used by the first processor to sequentially copy the plurality of first tensors into the second tensor in the target sequence.

In a possible implementation, the determining module 901 is further configured to: determine, by the second processor, an amount of occupied space based on a sum of space occupied by the plurality of first tensors; and determine, by the second processor, space information used to indicate the amount of occupied space.

The sending module 902 is further configured to send, to the first processor, a creation instruction carrying the space information. The creation instruction is used by the first processor to create the second tensor, and space occupied by the second tensor is the same as the amount of occupied space indicated by the space information.

In a possible implementation, the determining module 901 is further configured to: determine, by the second processor, second address information used to indicate a second address corresponding to the second tensor, and use the creation instruction to carry the second address information. The creation instruction carrying the second address information is used by the first processor to create the second tensor at the second address indicated by the second address information.

In a possible implementation, the determining module 901 is further configured to determine, by the second processor, a third identifier used to indicate a to-be-deleted first tensor.

The sending module 902 is further configured to send, by the second processor to the first processor, a deletion instruction carrying the third identifier. The deletion instruction is used by the first processor to delete the first tensor indicated by the third identifier.

In a possible implementation, the to-be-deleted first tensor is a first tensor indicated in a target instruction received by the second processor, or a first tensor that is not referenced for duration that exceeds a target threshold.

In a possible implementation, the determining module 901 is further configured to: determine, by the second processor, a fourth identifier used to indicate a third tensor, where the third tensor includes some of the plurality of first tensors included in the second tensor; and determine, by the second processor, a second processing identifier used to indicate a second processing operation corresponding to the third tensor.

The sending module 902 is further configured to send, by the second processor to the first processor, a second processing instruction carrying the fourth identifier and the second processing identifier. The second processing instruction is used by the first processor to process, based on the second processing operation indicated by the second processing identifier, the third tensor indicated by the fourth identifier.

In a possible implementation, in response to a case in which the third tensor includes a plurality of first tensors, the plurality of first tensors included in the third tensor are adjacent first tensors in the second tensor.

It should be understood that, when the apparatuses provided in FIG. 8 and FIG. 9 implement functions of the apparatuses, division into the foregoing functional modules is merely used as an example for description. In an actual application, the foregoing functions may be allocated to different functional modules for implementation based on a requirement. In other words, an internal structure of a device is divided into different functional modules, to implement all or some of the functions described above. In addition, the apparatuses provided in the foregoing embodiments and the method embodiment pertain to a same concept. For a specific implementation process of the apparatuses, refer to the method embodiment. Details are not described herein again.

An embodiment of this application provides a tensor processing device. The device includes a first processor and a second processor. The first processor is configured to perform the method performed by the first processor in the method embodiment shown in FIG. 3, and the second processor is configured to perform the method performed by the second processor in the method embodiment shown in FIG. 3.

FIG. 10 is a schematic diagram of an example structure of a tensor processing device 1000 according to this application. The tensor processing device 1000 shown in FIG. 10 is configured to perform operations in the tensor processing method shown in FIG. 3.

As shown in FIG. 10, the tensor processing device 1000 includes a processor 1001, a processor 1005, a memory 1003, and at least one communication interface 1004.

The processor 1001 and the processor 1005 each are, for example, a general-purpose CPU, a digital signal processor (digital signal processor, DSP), a network processor (network processor, NP), a GPU, a neural-network processing unit (neural-network processing unit, NPU), a data processing unit (Data Processing Unit, DPU), a microprocessor, one or more integrated circuits or application-specific integrated circuits (application-specific integrated circuit, ASIC) that are configured to implement the solutions of this application, a programmable logic device (programmable logic device, PLD), another programmable logic device, a transistor logic device, a hardware component, or any combination thereof. For example, the PLD is a complex programmable logic device (complex programmable logic device, CPLD), an FPGA, a generic array logic (generic array logic, GAL), or any combination thereof. The processor 1001 and the processor 1005 may implement or execute various logical blocks, modules, and circuits described with reference to content disclosed in this application. The processor may alternatively be a combination for implementing a computing function, for example, a combination including one or more microprocessors or a combination of a DSP and a microprocessor.

Optionally, the tensor processing device 1000 further includes a bus. The bus is configured to transfer information between components of the tensor processing device 1000. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, or the like. For ease of representation, the bus is represented by using only one thick line in FIG. 10. However, it does not mean that there is only one bus or only one type of bus.

For example, the memory 1003 is a read-only memory (read-only memory, ROM) or another type of storage device that may store static information and instructions; or a random access memory (random access memory, RAM) or another type of dynamic storage device that may store information and instructions; or an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, and a Blu-ray disc, or the like), a disk storage medium, another disk storage device, or any other medium that can be used to carry or store expected program code in an instruction or data structure form and that can be accessed by a computer. However, the memory 1003 is not limited thereto. For example, the memory 1003 exists independently and is connected to the processor 1001 and the processor 1005 by using the bus. The memory 1003 may alternatively be integrated with the processor 1001 and the processor 1005.

The communication interface 1004 is any apparatus of a transceiver type, and is configured to communicate with another device or a communication network. The communication network may be the Ethernet, a radio access network (radio access network, RAN), a wireless local area network (wireless local area network, WLAN), or the like. The communication interface 1004 may include a wired communication interface, and may further include a wireless communication interface. Specifically, the communication interface 1004 may be an Ethernet (Ethernet) interface, for example, a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network communication interface, or a combination thereof. The Ethernet interface may be an optical interface, an electrical interface, or a combination thereof. In some implementations of this application, the communication interface 1004 may be used by the tensor processing device 1000 to communicate with another device.

In a specific implementation, in some implementations, the processor 1001 and the processor 1005 each may include one or more CPUs, for example, a CPU 0 and a CPU 1 shown in FIG. 10. Each of the processors may be a single-core processor, or may be a multi-core processor. The processor herein may be one or more devices, circuits, and/or processing cores configured to process data (for example, computer program instructions).

In some implementations, the memory 1003 is configured to store program code 1010 for executing the solutions of this application, and the processor 1001 and the processor 1005 may execute the program code 1010 stored in the memory 1003. In other words, the tensor processing device 1000 may implement, by using the processor 1001, the processor 1005, and the program code 1010 in the memory 1003, the tensor processing method provided in the method embodiment. The program code 1010 may include one or more software modules. Optionally, the processor 1001 and the processor 1005 each may also store program code or instructions for executing the solutions of this application.

In a specific implementation process, the processor 1001 in the tensor processing device 1000 in this application may correspond to the first processor in the method embodiment. The processor 1001 reads instructions in the memory 1003, to perform all or some operations performed by the first processor in the method embodiment. The processor 1001 may further correspond to the apparatus shown in FIG. 8. Each functional module in the apparatus shown in FIG. 8 is implemented by using software of the tensor processing device 1000. In other words, the functional modules included in the apparatus shown in FIG. 8 are generated after the processor 1001 reads the program code 1010 stored in the memory 1003.

In a specific implementation process, the processor 1005 in the tensor processing device 1000 in this application may correspond to the second processor in the method embodiment. The processor 1005 reads the instructions in the memory 1003, to perform all or some operations performed by the second processor in the method embodiment. The processor 1005 may further correspond to the apparatus shown in FIG. 9. Each functional module in the apparatus shown in FIG. 9 is implemented by using software of the tensor processing device 1000. In other words, the functional modules included in the apparatus shown in FIG. 9 are generated after the processor 1005 reads the program code 1010 stored in the memory 1003.

Steps in the tensor processing method shown in FIG. 3 are completed by using an integrated logic circuit of hardware in the processor of the tensor processing device 1000, or by using instructions in a form of software. The steps of the methods disclosed with reference to this application may be directly performed and completed by a hardware processor, or may be performed and completed by a combination of hardware and a software module in a processor. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

It should be understood that the processor may be a CPU, or may be another general-purpose processor, a digital signal processor (digital signal processor, DSP), an application-specific integrated circuit (application-specific integrated circuit, ASIC), an FPGA or another programmable logic device, a discrete gate or a transistor logic device, a discrete hardware component, or the like. The general-purpose processor may be a microprocessor or any conventional processor, or the like. It should be noted that the processor may be a processor that supports an advanced reduced instruction set computing machine (advanced RISC machine, ARM) architecture.

Further, in an optional embodiment, the memory may include a read-only memory and a random access memory, and provide instructions and data for the processor. The memory may further include a nonvolatile random access memory. For example, the memory may further store information about a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application provides a tensor processing apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method performed by the first processor in the method embodiment.

An embodiment of this application provides a tensor processing apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method performed by the second processor in the method embodiment.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read only memory, ROM). The memory and the processor may be integrated on a same chip, or may be disposed on different chips. A type of the memory and a manner of disposing the memory and the processor are not limited in this application.

An embodiment of this application provides a computer program (product). The computer program (product) includes computer program code. When the computer program code is run on a computer, the computer is enabled to perform any one of the foregoing example tensor processing methods.

An embodiment of this application provides a computer-readable storage medium. The computer-readable storage medium stores a program or instructions. When the program or the instructions run on a computer, any one of the foregoing example tensor processing methods is performed.

An embodiment of this application provides a chip, including a processor, configured to: invoke, from a memory, instructions stored in the memory, and run the instructions, so that a communication device in which the chip is installed performs any one of the foregoing example tensor processing methods.

An embodiment of this application provides another chip, including an input interface, an output interface, a processor, and a memory. The input interface, the output interface, the processor, and the memory are connected through an internal connection path. The processor is configured to execute code in the memory, and when the code is executed, the processor is configured to perform the method in the foregoing aspects.

All or some of the foregoing implementations may be implemented by using software, hardware, firmware, or any combination thereof. When software is used to implement the implementations, all or some of the implementations may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), a semiconductor medium (for example, a solid-state drive), or the like.

In the context of this application, computer program code or related data may be carried by any proper carrier, so that the device, the apparatus, or the processor can perform various processing and operations described above. An example of the carrier includes a computer-readable medium, and the like.

It may be clearly understood by a person skilled in the art that, for the purpose of convenient and brief description, for a detailed working process of the foregoing system, device, and module, refer to a corresponding process in the foregoing method. Details are not described herein again.

In the several implementations provided in this application, it should be understood that the disclosed system, device, and method may be implemented in another manner. For example, the described device is merely an example. For example, division into modules is merely logical function division, and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one place, or may be distributed on a plurality of network modules. Some or all of the modules may be selected based on an actual requirement, to achieve objectives of the solutions of this application.

In addition, functional modules in implementations of this application may be integrated into one processing module, or each module may exist alone physically, or two or more modules may be integrated into one module. The integrated module may be implemented in a form of hardware, or may be implemented in a form of a software functional module.

In this application, terms such as "first" and "second" are used to distinguish between same items or similar items that have basically same functions. It should be understood that there is no logical or time sequence dependency between "first", "second", and "n^{th}", and a quantity and an execution sequence are not limited. It should be further understood that although terms such as "first" and "second" are used in the following descriptions to describe various elements, these elements should not be limited by the terms. These terms are merely used to distinguish one element from another element. For example, without departing from a scope of the various examples, a first device may be referred to as a second device, and similarly, a second device may be referred to as a first device. Both the first device and the second device may be communication devices, and in some cases, may be separate and different devices.

It should be further understood that sequence numbers of processes do not mean execution sequences in implementations of this application. The execution sequences of the processes should be determined based on functions and internal logic of the processes, and should not be construed as any limitation on the implementation processes of this application.

In this application, "at least one" means one or more and "a plurality of" means two or more. The terms "system" and "network" may be used interchangeably in this specification.

It should be understood that determining B based on A does not mean that B is determined based on only A, and B may be further determined based on A and other information.

It should be further understood that "one implementation", "an implementation", or "a possible implementation" mentioned throughout this specification means that particular features, structures, or characteristics related to the implementations are included in at least one implementation of this application. Therefore, "in one implementation", "in an implementation", or "in a possible implementation" appearing throughout this specification does not necessarily mean a same implementation. In addition, these particular features, structures, or characteristics may be combined in one or more implementations by using any proper manner.

In conclusion, the foregoing implementations are merely intended for describing the technical solutions of this application, but not for limiting the technical solutions of this application. Although this application is described in detail with reference to the foregoing implementations, a person of ordinary skill in the art should understand that modifications to the technical solutions recorded in the foregoing implementations or equivalent replacements to some technical features thereof may still be made, without departing from the scope of the technical solutions of implementations of this application.

## Claims

1. A tensor processing method, wherein the method comprises:
obtaining, by a first processor, a plurality of first tensors, and copying the plurality of first tensors into a second tensor, wherein the plurality of first tensors comprised in the second tensor occupy consecutive space in the second tensor;
receiving, by the first processor, a first processing instruction sent by a second processor, wherein the first processing instruction comprises a first identifier and a first processing identifier, the first identifier is used to indicate the second tensor, and the first processing identifier is used to indicate a first processing operation; and
processing, by the first processor based on the first processing operation indicated by the first processing identifier, the second tensor indicated by the first identifier.

2. The method according to claim 1, wherein the obtaining, by a first processor, a plurality of first tensors, and copying the plurality of first tensors into a second tensor comprises:
receiving, by the first processor, a plurality of copying instructions sent by the second processor, wherein the plurality of copying instructions are in a one-to-one correspondence with the plurality of first tensors, any copying instruction in the plurality of copying instructions comprises a second identifier, and the second identifier is used to indicate a first tensor corresponding to the any copying instruction; and
obtaining, by the first processor, the first tensor indicated by the second identifier, to obtain the plurality of first tensors, and copying the plurality of first tensors into the second tensor.

3. The method according to claim 2, wherein the any copying instruction in the plurality of copying instructions further comprises first address information, the first address information is used to indicate a first address, and the copying the plurality of first tensors into a second tensor comprises:
copying, by the first processor, any first tensor into a first address in the second tensor, wherein the first address is an address indicated by first address information comprised in a copying instruction corresponding to the any first tensor.

4. The method according to claim 2, wherein the plurality of copying instructions are instructions sent by the second processor in a target sequence, and the copying the plurality of first tensors into a second tensor comprises:
sequentially copying, by the first processor, the plurality of first tensors into the second tensor in the target sequence.

5. The method according to any one of claims 1 to 4, wherein before the obtaining, by a first processor, a plurality of first tensors, the method further comprises:
receiving, by the first processor, a creation instruction sent by the second processor, wherein the creation instruction comprises space information, the space information is used to indicate an amount of occupied space, and the amount of occupied space is determined based on a sum of space occupied by the plurality of first tensors; and
creating, by the first processor, the second tensor based on the amount of occupied space indicated by the space information, wherein space occupied by the second tensor is the same as the amount of occupied space indicated by the space information.

6. The method according to claim 5, wherein the creation instruction further comprises second address information, the second address information is used to indicate a second address, and the creating, by the first processor, the second tensor based on the amount of occupied space indicated by the space information comprises:
creating, by the first processor based on the amount of occupied space indicated by the space information, the second tensor at the second address indicated by the second address information.

7. The method according to any one of claims 1 to 6, wherein after the obtaining, by a first processor, a plurality of first tensors, and copying the plurality of first tensors into a second tensor, the method further comprises:
receiving, by the first processor, a deletion instruction sent by the second processor, wherein the deletion instruction comprises a third identifier, and the third identifier is used to indicate a to-be-deleted first tensor; and
deleting, by the first processor, the first tensor indicated by the third identifier.

8. The method according to any one of claims 1 to 7, wherein the method further comprises:
receiving, by the first processor, a second processing instruction sent by the second processor, wherein the second processing instruction comprises a fourth identifier and a second processing identifier, the fourth identifier is used to indicate a third tensor, the third tensor comprises some of the plurality of first tensors comprised in the second tensor, and the second processing identifier is used to indicate a second processing operation; and
processing, by the first processor based on the second processing operation indicated by the second processing identifier, the third tensor indicated by the fourth identifier.

9. The method according to claim 8, wherein in response to a case in which the third tensor comprises a plurality of first tensors, the plurality of first tensors comprised in the third tensor are adjacent first tensors in the second tensor.

10. A tensor processing method, wherein the method comprises:
determining, by a second processor, a first identifier used to indicate a second tensor, wherein a plurality of first tensors comprised in the second tensor occupy consecutive space in the second tensor, and the plurality of first tensors comprised in the second tensor are obtained by a first processor by copying the plurality of first tensors;
determining, by the second processor, a first processing identifier used to indicate a first processing operation corresponding to the second tensor; and
sending, by the second processor to the first processor, a first processing instruction carrying the first identifier and the first processing identifier, wherein the first processing instruction is used by the first processor to process, based on the first processing operation indicated by the first processing identifier, the second tensor indicated by the first identifier.

11. The method according to claim 10, wherein before the determining, by a second processor, a first identifier used to indicate a second tensor, the method further comprises:
determining, by the second processor, a plurality of second identifiers used to indicate the plurality of first tensors, wherein the plurality of first tensors are in a one-to-one correspondence with the plurality of second identifiers; and
sending, by the second processor to the first processor, a plurality of copying instructions carrying the plurality of second identifiers, wherein the plurality of second identifiers are in a one-to-one correspondence with the plurality of copying instructions, and the plurality of copying instructions are used by the first processor to copy, into the second tensor, the plurality of first tensors indicated by the plurality of second identifiers.

12. The method according to claim 11, wherein before the sending, by the second processor to the first processor, a plurality of copying instructions carrying the plurality of second identifiers, the method further comprises:
determining, by the second processor, first address information used to indicate a first address corresponding to any first tensor; and
using, by the second processor, a copying instruction corresponding to the any first tensor to carry the first address information, wherein the copying instruction carrying the first address information is used by the first processor to copy the any first tensor into a first address indicated by the first address information.

13. The method according to claim 11, wherein the sending, by the second processor to the first processor, a plurality of copying instructions carrying the plurality of second identifiers comprises:
sending, by the second processor, the plurality of copying instructions to the first processor in a target sequence, wherein the plurality of copying instructions are used by the first processor to sequentially copy the plurality of first tensors into the second tensor in the target sequence.

14. The method according to any one of claims 10 to 13, wherein before the determining, by a second processor, a first identifier used to indicate a second tensor, the method further comprises:
determining, by the second processor, an amount of occupied space based on a sum of space occupied by the plurality of first tensors; and
determining, by the second processor, space information used to indicate the amount of occupied space, and sending, to the first processor, a creation instruction carrying the space information, wherein the creation instruction is used by the first processor to create the second tensor, and space occupied by the second tensor is the same as the amount of occupied space indicated by the space information.

15. The method according to claim 14, wherein before the sending, to the first processor, a creation instruction carrying the space information, the method further comprises:
determining, by the second processor, second address information used to indicate a second address corresponding to the second tensor, and using the creation instruction to carry the second address information, wherein the creation instruction carrying the second address information is used by the first processor to create the second tensor at the second address indicated by the second address information.

16. The method according to any one of claims 10 to 15, wherein the method further comprises:
determining, by the second processor, a third identifier used to indicate a to-be-deleted first tensor; and
sending, by the second processor to the first processor, a deletion instruction carrying the third identifier, wherein the deletion instruction is used by the first processor to delete the first tensor indicated by the third identifier.

17. The method according to claim 16, wherein the to-be-deleted first tensor is a first tensor indicated in a target instruction received by the second processor, or a first tensor that is not referenced for duration that exceeds a target threshold.

18. The method according to any one of claims 10 to 17, wherein the method further comprises:
determining, by the second processor, a fourth identifier used to indicate a third tensor, wherein the third tensor comprises some of the plurality of first tensors comprised in the second tensor;
determining, by the second processor, a second processing identifier used to indicate a second processing operation corresponding to the third tensor; and
sending, by the second processor to the first processor, a second processing instruction carrying the fourth identifier and the second processing identifier, wherein the second processing instruction is used by the first processor to process, based on the second processing operation indicated by the second processing identifier, the third tensor indicated by the fourth identifier.

19. The method according to claim 18, wherein in response to a case in which the third tensor comprises a plurality of first tensors, the plurality of first tensors comprised in the third tensor are adjacent first tensors in the second tensor.

20. A tensor processing apparatus, wherein the apparatus comprises:
an obtaining module, configured to obtain, by a first processor, a plurality of first tensors;
a copying module, configured to copy the plurality of first tensors into a second tensor, wherein the plurality of first tensors comprised in the second tensor occupy consecutive space in the second tensor;
a receiving module, configured to receive, by the first processor, a first processing instruction sent by a second processor, wherein the first processing instruction comprises a first identifier and a first processing identifier, the first identifier is used to indicate the second tensor, and the first processing identifier is used to indicate a first processing operation; and
a processing module, configured to process, by the first processor based on the first processing operation indicated by the first processing identifier, the second tensor indicated by the first identifier.

21. The apparatus according to claim 20, wherein the copying module is configured to: receive, by the first processor, a plurality of copying instructions sent by the second processor, wherein the plurality of copying instructions are in a one-to-one correspondence with the plurality of first tensors, any copying instruction in the plurality of copying instructions comprises a second identifier, and the second identifier is used to indicate a first tensor corresponding to the any copying instruction; and obtain, by the first processor, the first tensor indicated by the second identifier, to obtain the plurality of first tensors, and copy the plurality of first tensors into the second tensor.

22. The apparatus according to claim 21, wherein the any copying instruction in the plurality of copying instructions further comprises first address information, the first address information is used to indicate a first address, and the copying module is configured to copy, by the first processor, any first tensor into a first address in the second tensor, wherein the first address is an address indicated by first address information comprised in a copying instruction corresponding to the any first tensor.

23. The apparatus according to claim 21, wherein the plurality of copying instructions are instructions sent by the second processor in a target sequence, and the copying module is configured to sequentially copy, by the first processor, the plurality of first tensors into the second tensor in the target sequence.

24. The apparatus according to any one of claims 20 to 23, wherein the receiving module is further configured to receive, by the first processor, a creation instruction sent by the second processor, wherein the creation instruction comprises space information, the space information is used to indicate an amount of occupied space, and the amount of occupied space is determined based on a sum of space occupied by the plurality of first tensors; and
the apparatus further comprises a creation module, configured to create, by the first processor, the second tensor based on the amount of occupied space indicated by the space information, wherein space occupied by the second tensor is the same as the amount of occupied space indicated by the space information.

25. The apparatus according to claim 24, wherein the creation instruction further comprises second address information, the second address information is used to indicate a second address, and the creation module is configured to create, by the first processor based on the amount of occupied space indicated by the space information, the second tensor at the second address indicated by the second address information.

26. The apparatus according to any one of claims 20 to 25, wherein the receiving module is further configured to receive, by the first processor, a deletion instruction sent by the second processor, wherein the deletion instruction comprises a third identifier, and the third identifier is used to indicate a to-be-deleted first tensor; and
the apparatus further comprises a deletion module, configured to delete, by the first processor, the first tensor indicated by the third identifier.

27. The apparatus according to any one of claims 20 to 26, wherein the apparatus module is further configured to receive, by the first processor, a second processing instruction sent by the second processor, wherein the second processing instruction comprises a fourth identifier and a second processing identifier, the fourth identifier is used to indicate a third tensor, the third tensor comprises some of the plurality of first tensors comprised in the second tensor, and the second processing identifier is used to indicate a second processing operation; and
the processing module is further configured to process, by the first processor based on the second processing operation indicated by the second processing identifier, the third tensor indicated by the fourth identifier.

28. The apparatus according to claim 27, wherein in response to a case in which the third tensor comprises a plurality of first tensors, the plurality of first tensors comprised in the third tensor are adjacent first tensors in the second tensor.

29. A tensor processing apparatus, wherein the apparatus comprises:
a determining module, configured to determine, by a second processor, a first identifier used to indicate a second tensor, wherein a plurality of first tensors comprised in the second tensor occupy consecutive space in the second tensor, and the plurality of first tensors comprised in the second tensor are obtained by a first processor by copying the plurality of first tensors, wherein
the determining module is further configured to determine, by the second processor, a first processing identifier used to indicate a first processing operation corresponding to the second tensor; and
a sending module, configured to send, by the second processor to the first processor, a first processing instruction carrying the first identifier and the first processing identifier, wherein the first processing instruction is used by the first processor to process, based on the first processing operation indicated by the first processing identifier, the second tensor indicated by the first identifier.

30. The apparatus according to claim 29, wherein the determining module is further configured to determine, by the second processor, a plurality of second identifiers used to indicate the plurality of first tensors, wherein the plurality of first tensors are in a one-to-one correspondence with the plurality of second identifiers; and
the sending module is further configured to send, by the second processor to the first processor, a plurality of copying instructions carrying the plurality of second identifiers, wherein the plurality of second identifiers are in a one-to-one correspondence with the plurality of copying instructions, and the plurality of copying instructions are used by the first processor to copy, into the second tensor, the plurality of first tensors indicated by the plurality of second identifiers.

31. The apparatus according to claim 30, wherein the determining module is further configured to: determine, by the second processor, first address information used to indicate a first address corresponding to any first tensor; and use, by the second processor, a copying instruction corresponding to the any first tensor to carry the first address information, wherein the copying instruction carrying the first address information is used by the first processor to copy the any first tensor into a first address indicated by the first address information.

32. The apparatus according to claim 30, wherein the sending module is configured to send, by the second processor, the plurality of copying instructions to the first processor in a target sequence, wherein the plurality of copying instructions are used by the first processor to sequentially copy the plurality of first tensors into the second tensor in the target sequence.

33. The apparatus according to any one of claims 29 to 32, wherein the determining module is further configured to: determine, by the second processor, an amount of occupied space based on a sum of space occupied by the plurality of first tensors; and determine, by the second processor, space information used to indicate the amount of occupied space; and
the sending module is further configured to send, to the first processor, a creation instruction carrying the space information, wherein the creation instruction is used by the first processor to create the second tensor, and space occupied by the second tensor is the same as the amount of occupied space indicated by the space information.

34. The apparatus according to claim 33, wherein the determining module is further configured to: determine, by the second processor, second address information used to indicate a second address corresponding to the second tensor, and use the creation instruction to carry the second address information, wherein the creation instruction carrying the second address information is used by the first processor to create the second tensor at the second address indicated by the second address information.

35. The apparatus according to any one of claims 29 to 34, wherein the determining module is further configured to determine, by the second processor, a third identifier used to indicate a to-be-deleted first tensor; and
the sending module is further configured to send, by the second processor to the first processor, a deletion instruction carrying the third identifier, wherein the deletion instruction is used by the first processor to delete the first tensor indicated by the third identifier.

36. The apparatus according to claim 35, wherein the to-be-deleted first tensor is a first tensor indicated in a target instruction received by the second processor, or a first tensor that is not referenced for duration that exceeds a target threshold.

37. The apparatus according to any one of claims 29 to 36, wherein the determining module is further configured to: determine, by the second processor, a fourth identifier used to indicate a third tensor, wherein the third tensor comprises some of the plurality of first tensors comprised in the second tensor; and determine, by the second processor, a second processing identifier used to indicate a second processing operation corresponding to the third tensor; and
the sending module is further configured to send, by the second processor to the first processor, a second processing instruction carrying the fourth identifier and the second processing identifier, wherein the second processing instruction is used by the first processor to process, based on the second processing operation indicated by the second processing identifier, the third tensor indicated by the fourth identifier.

38. The apparatus according to claim 37, wherein in response to a case in which the third tensor comprises a plurality of first tensors, the plurality of first tensors comprised in the third tensor are adjacent first tensors in the second tensor.

39. A tensor processing device, wherein the device comprises a first processor and a second processor, the first processor is configured to perform the tensor processing method according to any one of claims 1 to 9, and the second processor is configured to perform the tensor processing method according to any one of claims 10 to 19.

40. A computer-readable storage medium, wherein the storage medium stores at least one instruction, and the instruction is loaded and executed by a processor, to implement the tensor processing method according to any one of claims 1 to 19.
